Europäisches Patentamt

European Patent Office

Office européen des brevets

(19)

(11) Numéro de publication : **0 038 734**
**B1**

# (12) FASCICULE DE BREVET EUROPÉEN

(45) Date de publication du fascicule du brevet :
13.06.84

(51) Int. Cl.³ : **G 01 S 13/44**

(21) Numéro de dépôt : **81400543.5**

(22) Date de dépôt : **03.04.81**

(54) **Dispositif de normalisation du gradient d'écartométrie d'un radar, et radar air-sol comportant un tel dispositif.**

(30) Priorité : **23.04.80 FR 8009115**

(43) Date de publication de la demande :
**28.10.81 Bulletin 81/43**

(45) Mention de la délivrance du brevet :
**13.06.84 Bulletin 84/24**

(84) Etats contractants désignés :
**AT DE GB IT SE**

(56) Documents cités :
**US-A- 3 772 695**

(73) Titulaire : **THOMSON-CSF**
**173, Boulevard Haussmann**
**F-75379 Paris Cedex 08 (FR)**

(72) Inventeur : **Le Beyec, Guy**
**THOMSON-CSF SCPI 173, bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

## Description

La présente invention concerne un dispositif de normalisation du gradient d'écartométrie d'un radar. Elle concerne également un radar air-sol comportant un tel dispositif.

Les radars permettant de réaliser des mesures d'écartométrie comportent généralement deux voies de réception communément désignées par voie somme et voie différence. Le signal $\overrightarrow{\Sigma}$ issu de la voie somme est maximum pour un pointage de l'antenne dans la direction de la cible détectée ; le signal d'écartométrie ε issu de la combinaison des signaux somme $\overrightarrow{\Sigma}$ et différence $\overrightarrow{\Delta}$ est nul pour un pointage de l'antenne dans la direction de la cible détectée et présente un gradient autour de cette position particulière de l'antenne, sur un intervalle angulaire de valeur ± θ.

On connaît, d'après le brevet américain US-A-3 772 695 en particulier, un dispositif permettant d'éliminer les faux zéros dans un radar de poursuite. Le dispositif décrit dans ce brevet comprend des circuits de mesure de paramètres tels que le gradient d'écartométrie pour des positions d'antenne correspondant à des valeurs discrètes de site.

De la connaissance de la pente de ce gradient d'écartométrie dépend la précision des mesures de la position des cibles.

La connaissance de ce paramètre est particulièrement importante dans le cas de radars embarqués qui sont notamment utilisés pour effectuer des cartographies de sol. En effet, pour des avions par exemple volant à basse altitude, il est absolument nécessaire si la visibilité est mauvaise, de connaître avec précision la cartographie du sol afin d'éviter, notamment, les obstacles importants situés dans l'axe de déplacement de l'avion. La défaillance ou même le simple décalibrage de ce gradient d'écartométrie peut en effet être responsable d'accidents graves du fait de l'erreur dont les mesures sont entachées et en particulier le pouvoir de résolution du radar qui reste très inférieur aux performances autorisées par la prise en compte seule des fluctuations mécaniques de l'antenne autour de la position fixée.

Pour remédier à ces inconvénients, l'art antérieur utilise par exemple une source de signaux calibrés qui sont injectés, pendant un intervalle de temps prévu pour un test, au niveau des circuits à fréquence intermédiaire. Ce procédé, bien que permettant en théorie de vérifier la pente du gradient d'écartométrie, présente plusieurs inconvénients :

ce dispositif est généralement incompatible avec l'émission radar d'où une surveillance incomplète ;

en cas d'une défaillance des voies de mesure d'écartométrie dans la partie haute fréquence, ce procédé de test est totalement inopérant.

Pour remédier principalement au deuxième inconvénient, l'art antérieur utilise un petit dipôle rayonnant, situé au niveau de l'antenne radar, ce qui permet de tester tous les circuits de la voie d'écartométrie. Bien que séduisante, l'utilisation de ce dipôle rayonnant présente le double inconvénient de perturber le diagramme de rayonnement de l'antenne du radar, et de ne pas pouvoir créer sur l'antenne du radar une onde plane du fait même de sa proximité, et d'être en général incompatible avec l'émission radar.

Le dispositif selon l'invention permet de remédier à tous ces inconvénients par l'utilisation des échos de sol pour normaliser le gradient d'écartométrie.

Selon une caractéristique de l'invention, le dispositif de normalisation du gradient d'écartométrie site d'un radar air-sol aéroporté comportant :

une antenne assujettie à effectuer des balayages en gisement pour des valeurs de site déterminées ;

des moyens d'arrêt du balayage en gisement de l'antenne du radar pour une valeur de l'angle de gisement prédéterminée ;

des moyens permettant l'orientation en site de cette antenne successivement suivant un angle $S_0$, un angle $S_0 + \Delta S$ et un angle $S_0 - \Delta S$, où $S_0$ est une valeur angulaire prédéterminée et $\Delta S$ correspond à un léger dépointage en site par rapport à cette valeur $S_0$ ; et

des moyens de mesure permettant, à partir des signaux somme $\overrightarrow{\Sigma}$ et différence $\overrightarrow{\Delta}$ fournis par le radar, de calculer pour les angles de dépointage site $S_0 + \Delta S$ et $S_0 - \Delta S$ respectivement les écartométries en site $ε_1$ et $ε_2$ des échos de sol pour lesquels l'amplitude du signal différence $\overrightarrow{\Delta}$ est nulle lorsque l'antenne est orientée suivant l'angle de site $S_0$, l'écartométrie en site étant définie comme le rapport du produit scalaire des signaux somme et différence $\overrightarrow{\Sigma}$ et $\overrightarrow{\Delta}$ au carré du module du signal somme $\overrightarrow{\Sigma}$, et les angles de dépointage site $\Delta S_1$ et $\Delta S_2$ correspondant respectivement aux écartométries en site $ε_1$ et $ε_2$ est caractérisé en ce qu'il comprend en outre :

une boucle d'asservissement effectuant l'opération

$$V' = V_s - \left( \frac{|\Delta S_1| + |\Delta S_2|}{2} \times k \right)$$

où $V_s$ est une constante prédéterminée et ajustant le paramètre k de façon à ce que la valeur de V' soit nulle ;

des moyens de correction de l'écartométrie site commandés par un signal représentatif de la valeur du paramètre k.

D'autres avantages et caractéristiques de l'invention ressortiront de la description qui suit, illustrée à l'aide des figures qui représentent :

la figure 1, un schéma montrant le procédé utilisé pour effectuer une cartographie du sol ;

la figure 2, un exemple des signaux somme $\vec{\Sigma}$ et écartométrie $\varepsilon$ ;

les figures 3, 4, 5, des schémas illustrant le procédé utilisé selon l'invention, pour le calibrage du signal d'écartométrie $\varepsilon$ ;

la figure 6, un diagramme temporel montrant un exemple de répartition du temps de calibration entre les différentes étapes successives ;

la figure 7, un bloc diagramme montrant un exemple de réalisation du dispositif selon l'invention.

La précision des mesures d'écartométrie dépend particulièrement de la connaissance de la calibration du signal d'écartométrie $\varepsilon$ et plus spécialement de sa pente. La présente invention vise à définir un procédé de calibration de ce signal d'écartométrie $\varepsilon$, et un dispositif mettant en œuvre ce procédé.

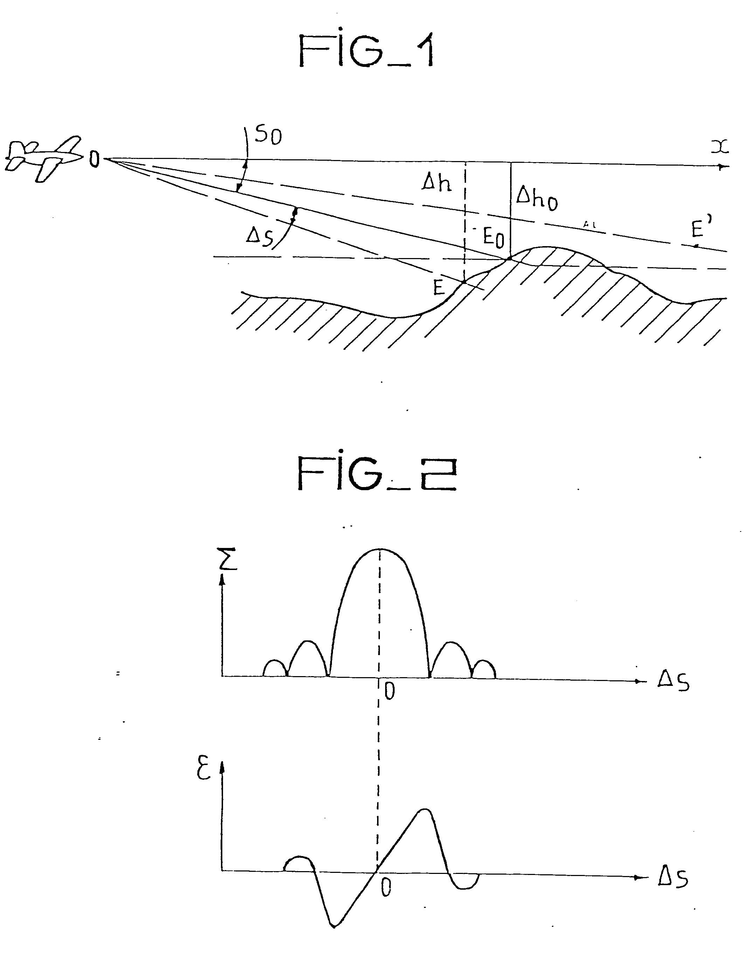

La figure 1 montre un schéma illustrant le procédé de relevé cartographique par un radar embarqué par exemple à bord d'un avion ou d'un missile. Lorsqu'un avion ou un missile se déplace à une altitude relativement basse, il est indispensable de connaître avec un certain temps d'avance les obstacles qui peuvent se trouver sur sa trajectoire.

Pour ce faire, l'antenne du radar est inclinée selon un angle de site $S_0$ choisi de façon à permettre une détection des obstacles suffisamment en avance pour permettre une modification éventuelle de trajectoire.

Les vecteurs $\vec{OE}$ et $\vec{OE}'$ délimitent le lobe principal de rayonnement autour de l'axe $OE_0$ incliné d'un angle $S_0$ par rapport à l'horizontal. Le radar effectue à chaque position particulière de l'antenne un échantillonnage à plusieurs distances, de façon à connaître pour chacun des échos de sol reçus, sa distance et son écart angulaire par rapport à l'axe $\vec{OE_0}$ (écartométrie dans le plan site).

Cet écart angulaire en site $\Delta S$ est déterminé à partir du signal $\varepsilon$ d'écartométrie, bien connu de l'homme de l'art, et qui peut s'écrire :

$$\varepsilon = \frac{\vec{\Delta} \cdot \vec{\Sigma}}{\| \vec{\Sigma} \|^2} .$$

Cette opération est répétée pour plusieurs valeurs particulières en gisement, ce qui permet d'obtenir la connaissance du sol dans un domaine angulaire déterminé. L'ensemble de ces opérations peut être répété pour plusieurs valeurs de l'angle de site $S_0$ permettant ainsi d'élargir le domaine connu de la topographie du sol.

La figure 1 montre une mesure effectuée dans la direction de déplacement du porteur avec un angle de site particulier $S_0$.

Pour une distance de télémétrie $D = OE_0$, le signal différence $\vec{\Delta}$ est nul et donc le signal d'écartométrie $\varepsilon$ également. L'altitude $\Delta h_0$ du point $E_0$ est déterminée par un calculateur incorporé au radar à l'aide de la relation :

$$\Delta h_0 = D \sin S_0$$

cette expression se simplifie en tenant compte du fait que l'angle $S_0$ est souvent petit :

$$\Delta h_0 = D S_0$$

Pour une distance $D' = OE$, le signal différence $\vec{\Delta}$ n'est plus nul, et de celui-ci le calculateur déduit la valeur de la correction de site $\Delta S$. L'altitude $\Delta h$ se calcule alors de la même façon que précédemment :

$$\Delta h = D' \sin (S_0 + \Delta S)$$

ou

$$\Delta h = D'(S_0 + \Delta S)$$

si $S_0$ est petit.

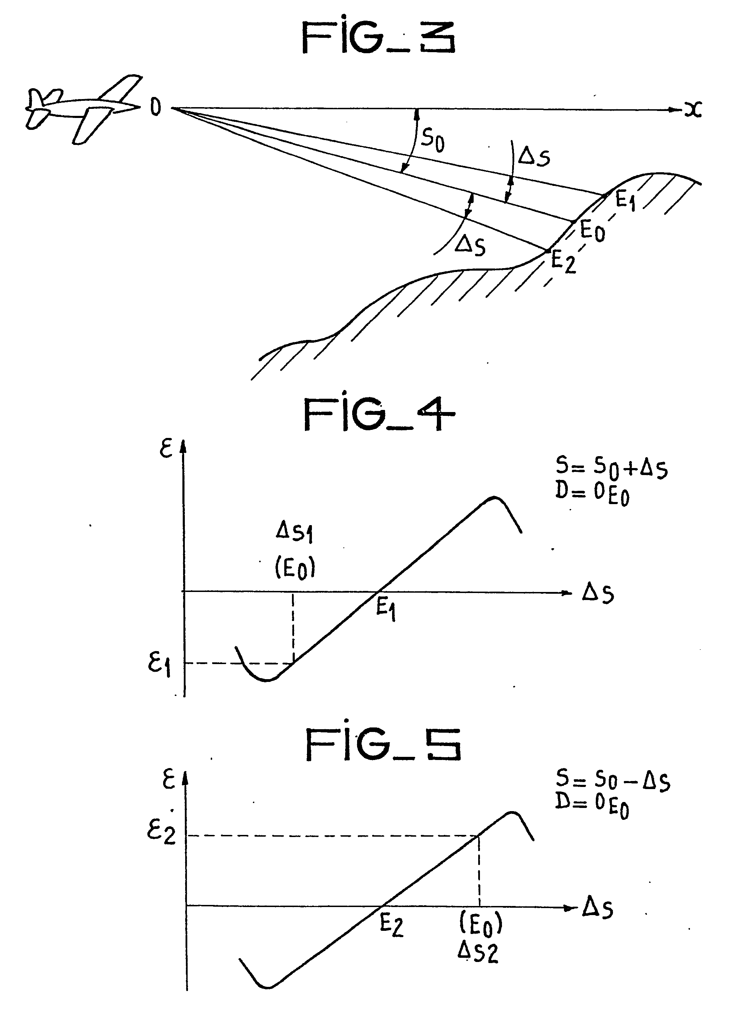

La figure 2 montre deux exemples des signaux somme $\vec{\Sigma}$ et écartométrie $\varepsilon$ mesurés à la sortie des circuits hautes fréquences du radar, et qui sont bien connus de l'homme de l'art.

La figure 3 illustre le procédé utilisé selon l'invention, pour calibrer le signal d'écartométrie $\varepsilon$ duquel sont extraites les valeurs $\Delta S$ de la correction de l'angle de site affichée $S_0$.

Pour un angle déterminé et quelconque de gisement, par exemple en fin de cycle de balayage de l'antenne, le radar effectue les opérations suivantes :

orientation de l'antenne dans un angle de site $S_0$ prédéterminée ;

détermination de la distance $OE_0$ par une mesure de télémétrie air-sol (amplitude du signal différence $\vec{\Delta}$ nulle) ;

dépointage en site de l'antenne d'une valeur $\Delta S$ connue et prédéterminée ;

**0 038 734**

mesure du signal d'écartométrie $\varepsilon_1$ correspondant au point $E_0$ par rapport au point $E_1$ en échantillonnant le signal écho à la distance $D = OE_0$ ;

dépointage en site de l'antenne d'une valeur $- \Delta S$ ;

mesure du signal d'écartométrie $\varepsilon_2$ correspondant au signal $E_0$ par rapport au point $E_2$ ;

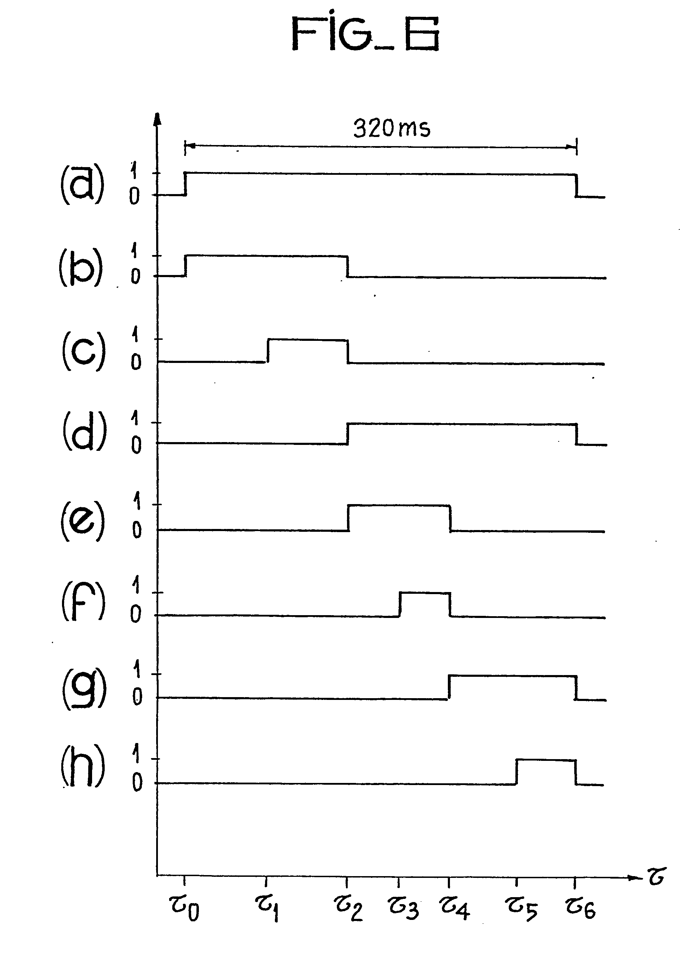

détermination des angles $\Delta S_1$ et $\Delta S_2$ obtenus respectivement à partir des signaux d'écartométrie $\varepsilon_1$ et $\varepsilon_2$ comme le montrent les figures 4 et 5 ;

le calcul de la moyenne arithmétique définie par :

$$V = k \frac{|\Delta S_1| + |\Delta S_2|}{2}$$

où k est une constante ;

calcul de la différence $V' = V_S - V$ entre une valeur souhaitée $V_S$ pour cette moyenne et la valeur V calculée, et asservissement de la constante k afin que cette différence $V'$ soit nulle.

L'ensemble de ces calculs est fait pendant un temps suffisamment court pour négliger le déplacement du porteur ; toutefois si la prise en compte de ce déplacement est nécessaire, un calculateur effectue les corrections nécessaires, lors de la détermination des angles de site $\Delta S_1$ et $\Delta S_2$ à partir des signaux $\varepsilon_1$ et $\varepsilon_2$ d'écartométrie. Ce calculateur reçoit alors d'une centrale à inertie les signaux représentatifs des différents paramètres définissant la trajectoire et la loi du mouvement de l'avion ou du missile.

La figure 6 montre un exemple de répartition du temps total de calibration supposé égal à 320 ms. La courbe (a) montre l'intervalle total de temps nécessaire à la calibration qui commence à l'instant $\tau_0$ et se termine à l'instant $\tau_6$. Pendant tout ce temps, l'antenne reste à un même angle de gisement, défini par rapport au sol, donc indépendamment de la trajectoire du porteur (antenne asservie). La courbe (b) représente le temps total nécessaire à la mesure pour un angle de site $S_0$ ; celui-ci se décompose en un premier intervalle de temps de $\tau_0$ à $\tau_1$ pour positionner l'antenne et un deuxième de $\tau_1$ à $\tau_2$ pour mesurer la distance $D = OE_0$ (courbe c).

La courbe (d) représente l'intervalle de temps, allant de $\tau_2$ à $\tau_6$, pendant lequel la distance $D = OE_0$ est conservée en mémoire. De l'instant $\tau_2$ à l'instant $\tau_3$, l'antenne s'oriente suivant l'angle de site $S_0 + \Delta S$ et de l'instant $\tau_3$ à l'instant $\tau_4$, la valeur du signal d'écartométrie $\varepsilon_1$ est mesurée et l'angle de site $\Delta S_1$ correspondant est calculé (courbes (e) et (f)). Enfin les mêmes opérations sont effectuées de l'instant $\tau_4$ à l'instant $\tau_6$ (courbes (g) et (h)) pour l'angle de site $S_0 - \Delta S$.

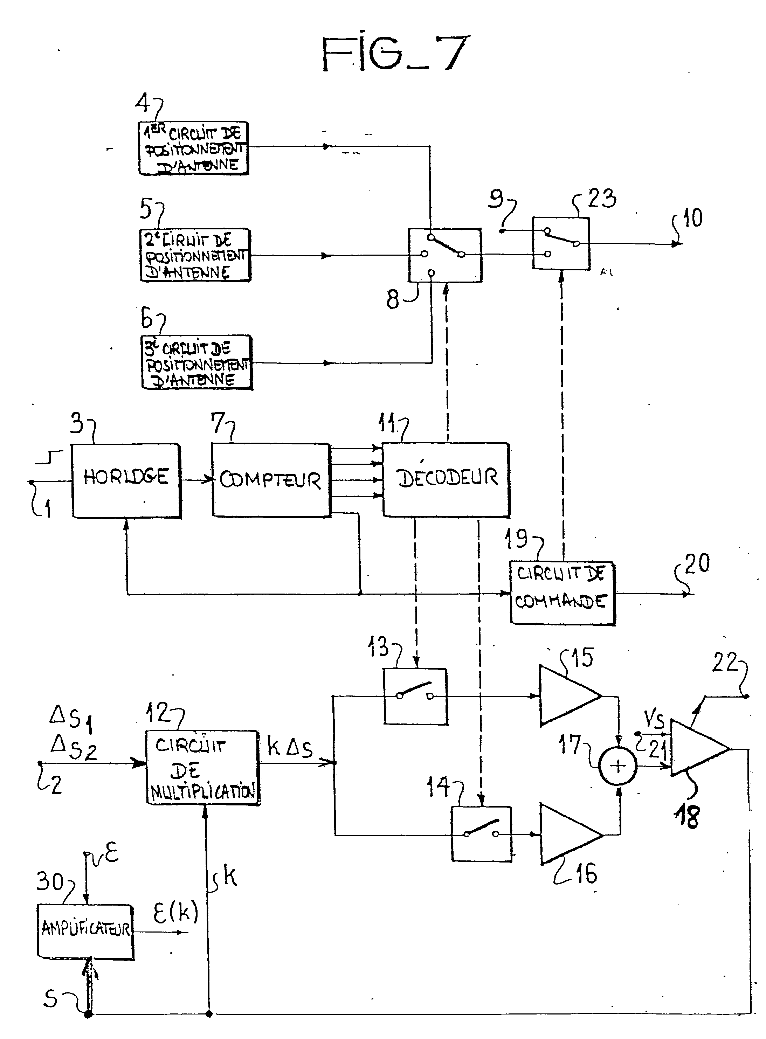

La figure 7 représente un mode préférentiel, mais non limitatif de réalisation du dispositif selon l'invention permettant d'effectuer l'ensemble des opérations définies précédemment.

Il comporte trois circuits 4, 5 et 6 permettant de positionner l'antenne du radar respectivement à un angle de site $S_0$ prédéterminé, à un angle de site $S_0 + \Delta S$ et à un angle de site $S_0 - \Delta S$ (l'angle de gisement étant le même pour ces trois circuits). Ces trois circuits 4, 5 et 6 peuvent, à titre d'exemple, être constitués par des mémoires dans lesquelles sont codées sous forme numérique les informations nécessaires au positionnement de l'antenne du radar. Ces trois circuits 4, 5 et 6 sont connectés à un moyen de commutation 8 pouvant comporter par exemple un ensemble de portes logiques ; le moyen de commutation 8 est lui-même connecté à un second moyen de commutation 23 dont la seconde entrée est reliée à une borne 9 et la sortie à une borne 10 correspondant à l'entrée des circuits d'asservissement de l'antenne du radar en angle de site. Le signal de la borne 9 correspond aux valeurs de l'angle de site de l'antenne du radar pendant un cycle de balayage. Les circuits élaborant la programmation de ces valeurs de l'angle de site ne font pas partie du dispositif selon l'invention.

Un circuit d'horloge 3 incrémente un circuit de comptage 7, dont les signaux de sortie, sous forme par exemple de signaux numériques, sont décodés par un circuit 11.

Ce circuit de décodage 11 comporte un ensemble de circuits mémoires et de comparateurs permettant de délivrer des signaux de commande à chaque fois que le signal numérique issu du circuit de comptage 7 est identique à un signal mémorisé dans le circuit de décodage 11. Ce circuit de décodage 11 est connecté aux bornes de commande du moyen de commutation 8 et de deux interrupteurs 13 et 14 pouvant être des portes logiques. Le circuit d'horloge 3 reçoit d'une borne 1 un signal de départ du comptage, et du circuit de comptage 7 un signal d'arrêt correspondant à la fin du test de calibration. Dans l'exemple de la figure 6, le temps entre le signal de départ et le signal d'arrêt est de 320 ms. Un circuit de commande 19 du second moyen de commutation 23, reçoit du circuit de comptage 7 un signal, correspondant à un ordre de basculement du moyen de commutation 23, à chaque début et fin de cycle de calibration, et délivre à chaque début de calibration un signal d'arrêt du balayage gisement par l'intermédiaire d'une borne 20. Un circuit de multiplication 12 a ses entrées connectées d'une part à une borne 2, recevant un signal correspondant à la valeur mesurée $\Delta S_1$ ou $\Delta S_2$ définie précédemment, et d'autre part la sortie d'un comparateur 18. La sortie du circuit de multiplication 12 est connectée aux deux interrupteurs commandés 13 et 14. La sortie de ces interrupteurs 13 et 14 est respectivement connectée à une borne d'entrée d'un circuit 17 calculant la moyenne arithmétique des signaux qui lui sont appliqués, par l'intermédiaire de deux circuits 15 et 16 effectuant l'intégration des signaux issus des interrupteurs 13 et 14 avec une constante de temps $\Delta \tau$ prédéterminée.

· La sortie du circuit 17 de calcul de la moyenne arithmétique est reliée à un comparateur 18 recevant

4

d'une borne 21 un signal correspondant à la grandeur $V_S$ précédemment définie. Ce comparateur 18, délivre au circuit de multiplication 12, un signal noté k proportionnel à l'écart entre les signaux appliqués sur ses entrées. Si le signal k est supérieur à une valeur prédéterminée stockée dans le comparateur 18, un signal d'invalidation des mesures correspondant au balayage d'antenne précédant cette normalisation est délivré par l'intermédiaire d'une borne 22.

A un angle prédéterminé en gisement, et pour chaque cycle de balayage d'antenne (ou tous les n cycles de balayage), le test de normalisation est effectué. Dans la description qui suit du fonctionnement, on suppose que l'angle de gisement choisi est celui correspondant à l'angle de fin de cycle de balayage de l'antenne, et que le test de normalisation est effectué à chaque cycle de balayage.

En fin de balayage de l'antenne à l'instant $\tau_0$ un signal est appliqué au circuit d'horloge 3 par l'intermédiaire de la borne 1. Ce signal a pour effet de positionner les moyens de commutation 8 et 23 de façon à ce que le circuit 4 soit relié à la borne 10, permettant ainsi l'orientation de l'antenne avec l'angle de site $S_0$ ; parallèlement le circuit de commande 19 arrête le balayage en gisement en délivrant un signal d'arrêt par l'intermédiaire de la borne 20.

Le radar détermine, à l'aide de circuits non représentés ici, la distance $D_0$ correspondant au point du sol situé dans l'axe de l'antenne.

Le circuit de comptage 7 continuant à être incrémenté, délivre à l'instant $\tau_2$ au circuit de décodage 11, un signal numérique correspondant au basculement du moyen de commutation de façon à relier le circuit 5 à la borne 10. Cette opération a pour effet de dépointer l'antenne en site d'une valeur $+ \Delta S$. Le radar détermine alors, à partir des échos du sol à la distance $D_0$ des circuits d'écartométrie de la valeur $\Delta S_1$ du dépointage mesurée qui est appliquée à l'instant $\tau_3$ à l'entrée 2 du multiplicateur 12. Simultanément le circuit décodeur 11 ferme l'interrupteur 13 permettant la transmission de la valeur $\Delta S_1$ au circuit d'intégration 15.

A l'instant $\tau_4$ le décodeur 11 provoque le basculement du moyen de commutation 8 de façon à connecter le circuit 6 à la borne 10 ; ainsi l'antenne se trouve positionnée en site à un angle $S_0 - \Delta S$. De même que précédemment, le radar recevant les échos de sol, détermine en échantillonnant les signaux reçus à la distance $D_0$, la valeur de l'écartométrie $\varepsilon_2$ qui correspond à la valeur $\Delta S_2$ mesurée par le radar pour ce dépointage en site. Cette valeur $\Delta S_2$ est appliquée à l'instant $\tau_5$ au circuit de multiplication 12 par l'intermédiaire de la borne 2. Parallèlement l'interrupteur 13 est ouvert et l'interrupteur 14 est fermé, ce qui permet la transmission du signal représentatif de la valeur $\Delta S_2$ au circuit d'intégration 16.

L'ensemble de ces opérations est répété régulièrement. Les valeurs de $\Delta S_1$ et $\Delta S_2$, intégrées sur plusieurs cycles de normalisation du gradient, sont alors transmises au circuit 17 qui calcule la valeur moyenne arithmétique de ces deux valeurs. La comparaison de cette valeur moyenne avec la valeur théorique souhaitée $V_S$ détermine la valeur de k qui est appliquée au multiplicateur 12.

Si ce coefficient k passe une valeur seuil maximale déterminée, il est vraisemblable que le radar a subi une défaillance passagère ou que certains de ses circuits sont détériorés. Dans ce cas, un signal d'invalidation des mesures du cycle de balayage d'antenne précédent est envoyé, par l'intermédiaire d'une borne 22, par exemple aux circuits de visualisation.

La valeur du paramètre k ainsi déterminé par la boucle d'asservissement, est enfin transmise par l'intermédiaire d'une borne S aux circuits d'écartométrie du radar, de façon à ce que le gradient soit modifié en fonction de la valeur de ce paramètre k. Cette modification peut être simplement réalisée à partir d'un amplificateur (30) recevant les signaux d'écartométrie $\varepsilon$ et dont le gain est commandé par le signal représentatif du paramètre k. L'extraction des valeurs de l'écartométrie $\Delta S$ se fait alors à partir des signaux $\varepsilon(k)$ dont l'amplitude est fonction du paramètre k et qui sont issus de cet amplificateur 30.

Les circuits de multiplication 12, d'intégration 15 et 16, de calcul de la moyenne arithmétique 17, de comparaison 18 et les deux interrupteurs 13 et 14 peuvent être réalisés soit à l'aide des techniques numériques, soit à l'aide des techniques analogiques.

Ce dispositif est applicable à tous les radars du type air-sol et plus particulièrement à ceux effectuant des relevés cartographiques.

On a ainsi décrit un dispositif de normalisation du gradient d'écartométrie et un radar comportant un tel dispositif.

**Revendications**

1. Dispositif de normalisation du gradient d'écartométrie site d'un radar air-sol aéroporté comportant :
— une antenne assujettie à effectuer des balayages en gisement pour des valeurs de site déterminées,
— des moyens d'arrêt du balayage en gisement de l'antenne du radar pour une valeur de l'angle de gisement prédéterminée ;
— des moyens (4, 5, 6, 8, 23) permettant l'orientation en site de cette antenne successivement suivant un angle $S_0$, un angle $S_0 + \Delta S$ et un angle $S_0 - \Delta S$, où $S_0$ est une valeur angulaire prédéterminée et $\Delta S$ correspond à un dépointage en site par rapport à cette valeur $S_0$ et
— des moyens de mesure permettant, à partir des signaux somme $\overrightarrow{\Sigma}$ et différence $\overrightarrow{\Delta}$ fournis par le

radar, de calculer pour les angles de dépointage site $S_0 + \Delta S$ et $S_0 - \Delta S$ respectivement les écartométries en site $\varepsilon_1$ et $\varepsilon_2$ des échos de sol pour lesquels l'amplitude du signal différence $\overline{\Delta}$ est nulle lorsque l'antenne est orientée suivant l'angle de site $S_0$, l'écartométrie en site étant définie comme le rapport du produit scalaire des signaux somme et différence $\overline{\Sigma}$ et $\overline{\Delta}$ au carré du module du signal somme, et les angles de dépointage site $\Delta S_1$ et $\Delta S_2$ correspondant respectivement aux écartométries en site $\varepsilon_1$ et $\varepsilon_2$, dispositif caractérisé en ce qu'il comprend en outre :
— une boucle d'asservissement (12, 13, 14, 15, 16, 17, 18) effectuant l'opération

$$V' = V_s - \left( \frac{\mid \Delta S_1 \mid + \mid \Delta S_2 \mid}{2} \times k \right)$$

où $V_s$ est une constante prédéterminée, et ajustant le paramètre k de façon à ce que la valeur de $V'$ soit nulle ;
— des moyens de correction (30) de l'écartométrie site commandés par un signal représentatif de la valeur du paramètre k.

2. Dispositif de normalisation du gradient d'écartométrie selon la revendication 1, caractérisé en ce que l'arrêt du balayage en gisement s'effectue à la fin de chaque cycle de balayage de l'antenne.

3. Dispositif de normalisation du gradient d'écartométrie selon la revendication 1, caractérisé en ce que les moyens d'orientation en site de l'antenne du radar pendant l'intervalle de temps nécessaire à la normalisation du gradient d'écartométrie comportent trois circuits (4, 5, 6) qui, connectés successivement à la borne d'entrée (10) des circuits d'asservissement en site de l'antenne par l'intermédiaire d'un moyen de commutation (8), permet l'orientation de l'antenne à des instants déterminés selon les angles $S_0$, $S_0 + \Delta S$ et $S_0 - \Delta S$.

4. Dispositif de normalisation du gradient d'écartométrie selon la revendication 1, caractérisé en ce que la boucle d'asservissement comporte un circuit de multiplication (12) recevant d'une borne (2) les signaux correspondant aux valeurs mesurées par le radar des angles de dépointage $\Delta S_1$ et $\Delta S_2$ et dont la sortie est connectée aux deux entrées d'un circuit de calcul (17), calculant la demi-somme des deux signaux $k \cdot \Delta S_1$ et $k \cdot \Delta S_2$ appliqués à son entrée, par l'intermédiaire respectivement de deux interrupteurs commandés (13, 14) et de deux circuits d'intégration (15, 16), un circuit comparateur (18) dont une première entrée est connectée à la sortie du circuit de calcul (17) et dont la seconde entrée est reliée à une borne (21) sur laquelle est disponible un signal correspondant à la valeur $V_s$ prédéterminée, le signal représentatif du paramètre k et délivré par le circuit comparateur (18) étant appliqué sur la seconde entrée du circuit de multiplication (12) et à une entrée (S) des moyens de correction (30) permettant de modifier l'écartométrie site.

5. Dispositif de normalisation du gradient d'écartométrie selon la revendication 4, caractérisé en ce que le circuit comparateur (18) délivre à une borne (22) un signal d'inhibition des mesures effectuées pendant les cycles de balayage d'antenne depuis la dernière normalisation du gradient d'écartométrie, si la valeur du coefficient k est supérieure à une valeur prédéterminée.

6. Dispositif de normalisation du gradient d'écartométrie selon les revendications 3 et 4, caractérisé en ce qu'il comporte, connectés en série, un circuit d'horloge (3), un circuit de comptage (7) et un décodeur (11), le décodeur (11) étant relié aux bornes de commande du moyen de commutation (8) et des deux interrupteurs (13, 14), le circuit de comptage (7) délivrant d'une part en fin de chaque cycle de normalisation du gradient d'écartométrie un signal d'arrêt au circuit d'horloge (3) et d'autre part, en début et en fin de chaque cycle de normalisation un signal de commande à un second moyen de commutation (23) intercalé entre le premier moyen de commutation (8) et la borne d'entrée (10) des circuits d'asservissement de l'antenne du radar, ce second moyen de commutation (23) délivrant soit la valeur de l'angle de site issue d'une borne (9) selon une programmation extérieure prédéterminée, soit la valeur contenue dans les circuits (4, 5, 6) permettant l'orientation de l'antenne selon les angles site $S_0$, $S_0 + \Delta S$, $S_0 - \Delta S$ respectivement.

7. Dispositif de normalisation du gradient d'écartométrie selon la revendication 1, caractérisé en ce que les signaux d'écartométrie $\varepsilon$ sont appliqués à un amplificateur (30) dont la commande de gain reçoit le signal représentatif du paramètre k.

8. Utilisation d'un dispositif de normalisation du gradient d'écartométrie selon l'une quelconque des revendications précédentes dans un radar air-sol embarqué sur un avion ou un missile et délivrant des signaux d'écartométrie.


## Claims

1. Device for the standardization of the elevation deviation measurement gradient of an airborne airground radar, comprising :
— an antenna slaved to perform azimuthal scans for determined values of elevation,
— means for stopping the azimuthal scan of the radar antenna for a predetermined value of the azimuthal angle ;
— means (4, 5, 6, 8, 23) permitting the elevation orientation of this antenna successively according to

an angle $S_0$, an angle $S_0 + \Delta S$ and an angle $S_0 - \Delta S$, wherein $S_0$ is a predetermined angle value and $\Delta S$ corresponds to an elevation shift with respect to this value $S_0$, and
— measurement means permitting to calculate from the sum $\vec{\Sigma}$ and difference $\vec{\Delta}$ signals and for the elevation shift angles $S_0 + \Delta S$ and $S_0 - \Delta S$, respectively, the elevation deviation measurements $\varepsilon_1$ and $\varepsilon_2$ of the ground echoes for which the amplitude of the difference signal $\vec{\Delta}$ is zero when the antenna is directed along the elevation angle $S_0$, the elevation being defined as the ratio of the scalar product of the sum $\vec{\Sigma}$ and difference $\vec{\Delta}$ signals to the square of the absolute value of the sum signal, and the elevation shift angles $\Delta S_1$ and $\Delta S_2$ respectively corresponding to the elevation deviation measurements $\varepsilon_1$ and $\varepsilon_2$, the device being characterized in that it further comprises :
— a control loop (12, 13, 14, 15, 16, 17, 18) performing the operation

$$V' = V_s - \left( \frac{|\Delta S_1| + |\Delta S_2|}{2} \times k \right)$$

wherein $V_S$ is a predetermined constant, and adjusting the parameter k in such a manner that the value of V' becomes zero ;
— means (30) for correcting the elevation deviation measurement controlled by a signal representative of the value of the parameter k.

2. Device for the standardization of the elevation deviation measurement gradient according to claim 1, characterized in that the stopping of the azimuthal scan is made at the end of each antenna scanning cycle.

3. Device for the standardization of the elevation deviation measurement gradient according to claim 1, characterized in that the means for the elevation adjustment of the radar antenna during the time interval required for the standardization of the deviation measurement gradiant comprises three circuits (4, 5, 6) which are successively connected to the input terminal (10) of the elevation control circuits of the antenna through switching means (8) and permit the antenna to be directed along the angles $S_0$, $S_0 + \Delta S$ and $S_0 - \Delta S$ at determined moments.

4. Device for the standardization of the elevation deviation measurement gradient according to claim 1, characterized in that the control loop comprises a multiplication circuit (12) receiving from a terminal (2) the signals corresponding to the values of the shift angles $\Delta S_1$ and $\Delta S_2$ measured by the radar and the output of which is connected to the two inputs of a calculation circuit (17) calculating the half-sum of the two signals $k \cdot \Delta S_1$ and $k \cdot \Delta S_2$ applied to its inputs through two controlled interrupters (13, 14) and two integrating circuits (15, 16), respectively, and a comparator circuit (18) a first input of which is connected to the output of the calculating circuits (17) and the second input of which is connected to a terminal (21) where a signal is available which corresponds to the predetermined value $V_s$, the signal representative of the parameter k and provided by the comparator circuit (18) being supplied to the second input of the multiplication circuit (12) and to an input (S) of the correcting means (30) permitting to modify the elevation deviation measurement.

5. Device for the standardization of the elevation deviation measurement gradient according to claim 4, characterized in that the comparator circuit (18) supplies to a terminal (22) a signal inhibiting the measurement performed during antenna scanning cycles subsequent to the latest standardization of the deviation measurement gradient if the value of the coefficient k exceeds a predetermined value.

6. Device for the standardization of the elevation deviation measurement gradient according to claims 3 and 4, characterized in that it comprises, connected in series, a clock circuit (3), a counting circuit (7) and a decoder (11), the decoder (10) being connected to the control terminals of the switching means (8) and of the two interrupters (13, 14), the counting circuit (7) supplying, on the one hand, a stop signal to the clock circuit (3) at the end of each cycle of standardization of the deviation measurement gradient, and, on the other hand, at the beginning and end of each standardization cycle, a control signal to second switching means (23) interconnected between the first switching means (8) and the input terminal (10) of the control circuits of the antenna, the second switching means (23) delivering either the value of the elevation angle supplied by a terminal (9) according to a predetermined external programming either the value contained within the circuits (4, 5, 6) permitting to direct the antenna along the elevation angles $S_0$, $S_0 + \Delta S$ and $S_0 - \Delta S$, respectively.

7. Device for the standardization of the elevation deviation measurement gradient according to claim 1, characterized in that the deviation measurement signals $\varepsilon$ are applied to an amplifier (30) the gain control of which receives the signal representative of the parameter k.

8. Use of a device for the standardization of the deviation measurement gradient according to any of the preceding claims in an airbone air-ground radar of an airplane or a missile supplying the deviation measurement signals.

**Ansprüche**

1. Vorrichtung zur Normierung des Höhenwinkel-Ablagemessungs-Gradienten eines an Bord mitgeführten Luft-Boden-Radars, enthaltend :

7

— eine Antenne mit Zwangsführung zur Seitenwinkelverschwenkung für bestimmte Höhenwinkelwerte,

— Mittel zum Anhalten der Seitenwinkelverschwenkung der Radarantenne für einen vorbestimmten Seitenwinkelwert ;

— Mittel (4, 5, 6, 8, 23) zur Höhenwinkeleinstellung dieser Antenne nacheinander auf einen Winkel $S_0$, einen Winkel $S_0 + \Delta S$ und einen Winkel $S_0 - \Delta S$, worin $S_0$ ein vorbestimmter Winkelwert ist und $\Delta S$ einer Höhenwinkel-Fehlausrichtung gegenüber diesem Wert $S_0$ entspricht, und

— Meßmittel zur aus den von dem Radar gelieferten Summen- und Differenzsignalen $\overrightarrow{\Sigma}$, $\overrightarrow{\Delta}$ erfolgenden Berechnung der Höhenwinkel-Ablagemeßwerte $\varepsilon_1$ und $\varepsilon_2$ der Bodenechos für die Höhenwinkel-Fehlausrichtungen $S_0 + \Delta S$ und $S_0 - \Delta S$ und für welche die Amplitude des Differenzsignals $\overrightarrow{\Delta}$ Null wird, wenn die Antenne auf den Höhenwinkel $S_0$ eingestellt ist, wobei die Höhenwinkel-Ablagemessung definiert ist als Verhältnis des Skalarproduktes aus Summensignal $\overrightarrow{\Sigma}$ und Differenzsignal $\overrightarrow{\Delta}$ zu dem Quadrat des Betrages des Summensignals, und wobei die Höhenwinkel-Fehlausrichtungen $\Delta S_1$ und $\Delta S_2$ dem Höhenwinkel-Ablagemeßwert $\varepsilon_1$ bzw. $\varepsilon_2$ entsprechen, wobei die Vorrichtung dadurch gekennzeichnet ist, daß sie ferner enthält ;

— eine Regelschleife (12, 13, 14, 15, 16, 17, 18), welche folgende Operation durchführt

$$V' = V_s - \left( \frac{|\Delta S_1| + |\Delta S_2|}{2} \times k \right)$$

worin $V_S$ eine vorbestimmte Konstante ist, und zur Einstellung des Parameters k derart, daß der Wert von $V'$ zu Null wird ;

— Korrekturmittel (30) zur Korrektur der Höhenwinkel-Ablagemessung, die durch ein Signal gesteuert werden, welches den Wert des Parameters k darstellt.

2. Vorrichtung zur Normierung des Ablagemessungs-Gradienten, nach Anspruch 1, dadurch gekennzeichnet, daß das Anhalten der Seitenwinkelverschwenkung am Ende jedes Verschwenkungszyklus der Antenne erfolgt.

3. Vorrichtung zur Normierung des Ablagemessungs-Gradienten, nach Anspruch 1, dadurch gekennzeichnet, daß die Mittel zur Höhenwinkeleinstellung der Radarantenne während des Zeitintervalls, das für die Normierung des Ablagemessungs-Gradienten erforderlich ist, drei Schaltungen (4, 5, 6) enthalten, die nacheinander an den Eingangsanschluß (10) der Höhenwinkel-Regelschaltungen der Antenne über eine Umschalteinrichtung (8) angeschlossen werden und die Einstellung der Antenne zu bestimmten Zeitpunkten auf die Winkel $S_0$, $S_0 + \Delta S$ und $S_0 - \Delta S$ ermöglichen.

4. Vorrichtung zur Normierung des Ablagemessungs-Gradienten, nach Anspruch 1, dadurch gekennzeichnet, daß die Regelschleife eine Multiplizierschaltung (12) enthält, welche von einem Anschluß (2) die Signale empfängt, die den durch das Radar gemessenen Werten der Fehlausrichtungswinkel $\Delta S_1$ und $\Delta S_2$ empfängt und deren Ausgang an die zwei Eingänge einer Rechenschaltung (17) angeschlossen ist, welche die halbe Summe der beiden Signale $k \cdot \Delta S_1$ und $k \cdot \Delta S_2$ berechnet, die an ihren Eingang jeweils über einen von zwei gesteuerten Unterbrechern (13, 14) und eine von zwei Integrierschaltungen (15, 16) angelegt werden, und eine Komparatorschaltung (18) enthält, deren erster Eingang mit dem Ausgang der Rechenschaltung (17) verbunden ist und deren zweiter Eingang an einen Anschluß (21) angeschlossen ist, an dem ein Signal verfügbar ist, welches dem vorbestimmten Wert $V_S$ entspricht, wobei das dem Parameter k entsprechende und von der Komparatorschaltung (18) abgegebene Signal an den zweiten Eingang der Multiplizierschaltung (12) und an einen Eingang (S) der Korrekturmittel (30) angelegt ist, welche die Modifizierung des Höhenwinkel-Ablagemessung ermöglichen.

5. Vorrichtung zur Normierung des Ablagemessungs-Gradienten, nach Anspruch 4, dadurch gekennzeichnet, daß die Komparatorschaltung (18) an einen Anschluß (22) ein Sperrsignal zur Sperrung der Messungen abgibt, die während der Antennenverschwenkungszyklen seit der letzten Normierung des Ablagemessungs-Gradienten erfolgten, wenn der Wert des Koeffizienten k größer als ein vorbestimmter Wert ist.

6. Vorrichtung zur Normierung des Ablagemessungs-Gradienten, nach den Ansprüchen 3 und 4, dadurch gekennzeichnet, daß sie, in Reihe geschaltet, eine Taktschaltung (3), eine Zählschaltung (7) und einen Decoder (11) enthält, wobei der Decoder (11) an die Steueranschlüsse der Umschalteinrichtung (8) und der zwei Unterbrecher (13, 14) angeschlossen ist, die Zählschaltung (7) einerseits am Ende jedes Zyklus der Normierung des Ablagemessungs-Gradienten ein Anhaltsignal an die Taktschaltung (3) abgibt und andrerseits bei Beginn und Ende jedes Normierungszyklus ein Steuersignal an eine zweite Umschalteinrichtung (23) abgibt, die zwischen die erste Umschalteinrichtung (8) und den Eingangsanschluß (10) der Regelschaltungen für die Radarantenne eingefügt ist, wobei diese zweite Umschalteinrichtung (23) entweder den Höhenwinkelwert, der von einem Anschluß (9) gemäß einer äußeren vorbestimmten Programmierung eingegeben wird, oder den Wert ausgibt, der in den Schaltungen (4, 5, 6) zur Einstellung der Antenne auf den Höhenwinkel $S_0$ bzw. $S_0 + \Delta S$ bzw. $S_0 - \Delta S$ enthalten ist.

7. Vorrichtung zur Normierung des Ablagemessungs-Gradienten, nach Anspruch 1, dadurch gekennzeichnet, daß die Ablagemeß-Signale $\varepsilon$ an einen Verstärker (30) angelegt werden, dessen Verstärkungssteuerung das Signal empfängt, welches den Parameter k darstellt.

8. Verwendung einer Vorrichtung zur Normierung des Ablagemessungs-Gradienten nach einem der vorstehenden Ansprüche in einem Luft-Boden-Radar an Bord eines Flugzeugs oder einer Rakete, welches Ablagemeß-Signale abgibt.

# FIG_1

# FIG_2

# FIG_3

# FIG_4

$S = S_0 + \Delta S$
$D = 0 E_0$

# FIG_5

$S = S_0 - \Delta S$
$D = 0 E_0$

# FIG_6

FIG_7